# EUROPEAN PATENT SPECIFICATION

(11) **EP 2 768 777 B1**
(45) Date of publication and mention of the grant of the patent: **12.12.2018**
(21) Application number: 12841230.1
(22) Date of filing: 09.10.2012
(51) Int. Cl.: A01N 25/00, A01N 37/00, A01N 59/00, C02F 1/50, C02F 1/76, C02F 103/28, C02F 1/66

(54) **USE OF SULFAMIC ACID IN COMBINATION WITH AMMONIUM SULFATE AS STABILIZERS FOR SODIUM HYPOCHLORITE CONTAINING BIOCIDES IN THE PAPER AREA**
VERWENDUNG VON SULFAMINSÄURE IN KOMBINATION MIT AMMONIUMSULFAT ALS STABILISATOREN FÜR NATRIUMHYPOCHLORIT ENTHALTENDE BIOZIDE IM BEREICH PAPIER
UTILISATION D'ACIDE SULFAMIQUE EN COMBINAISON AVEC DU SULFATE D'AMMONIUM COMME STABILISANTS POUR DES BIOCIDES COMPRENANT DE L'HYPOCHLORITE DE SODIUM DANS LE DOMAINE DU PAPIER

(30) Priority: 21.10.2011 CN 201110328654; 04.11.2011 US 201113289578
(43) Date of publication of application: 27.08.2014
(73) Proprietor: Nalco Company, Naperville, IL 60563-1198 (US)
(72) Inventor: TU, Wen Li, Shanghai 201210 (CN); RICE, Laura E., Saint Charles, Illinois 60174 (US); COOPER, Andrew J., Oswego, Illinois 60543 (US); LUTH, Eliza M., Midlothian, Illinois 60445 (US); LU, Yu-Mei, Taipei 11082 (TW); SHEN, Jian Kun, Shanghai 201107 (CN)
(74) Representative: Godemeyer Blum Lenze Patentanwälte Partnerschaft mbB - werkpatent
(86) International application number: PCT/US2012/059283
(87) International publication number: WO 2013/059019

(56) References cited:
- US-A- 5 942 126
- US-A1- 2002 056 689
- US-A1- 2003 029 812
- US-A1- 2003 029 812
- US-A1- 2005 147 528
- US-A1- 2005 147 528
- US-A1- 2006 089 285
- US-A1- 2010 092 574
- US-A1- 2010 092 574

## Description

### Background of the Invention

At least one invention pertains to compositions and methods for reducing biological activity in process streams, e.g. water based process streams. Biological activity in process streams is problematic for a variety of reasons, including, but not limited to sanitation problems, process equipment efficiency problems, and product quality problems. For example, in papermaking processes, high biological activity levels have a deleterious effect on equipment operation. The problems associated with manufacturing certain paper types, e.g. tissue/recycled products, are more pronounced, because high fungal levels present the quandary of providing a biocide program that stabilizes the biocide well enough so that it is not readily consumed (good persistence) and providing a biocide at sufficient levels to combat periodic spikes in biological activity - a need for less stabilization/decreased persistence. Moreover, bleaching/processing of recycled fiber presents the additional quandary for papermakers because papermakers are balancing the addition of sulfite post bleaching/processing of recycled fibers, which quenches a halogen, e.g. chlorine, with the need to maintain chlorine in the system, more specifically, a persistent level of chlorine in the papermaking system without having to add more halogen/chlorine than is necessary. Thus, there is a need for a further refinement of biocide-stabilizer formulations and delivery protocols, which can treat systems more effectively and in an environmental friendly manner, such as using less chlorine/halogen, which in turn reduces halogen by-product formation.

At least one invention relates to methods and compositions effective at stabilizing oxidant biocides. Oxidant biocides such as peroxide acid and halogen chemicals like sodium hypochlorite have been widely used in the pulp and paper industry. These oxidant biocides are highly effective at immediately killing large numbers of microorganisms. Unfortunately, after their introduction into process water systems, oxidant biocides are not naturally stable and they tend to oxidize rapidly and over time lose their effectiveness. In environments with very high populations of microorganisms such as in process water which is rich in organic and inorganic material on which the microorganisms can feast, sufficient numbers of microorganisms can survive until after the oxidant biocides have lost effectiveness. As a result, unless there is sufficient residual biocide present, the microorganism population will soon recover from an oxidant biocide treatment. In some cases, halogen tolerant bacteria strains develop due to repeated introduction of single oxidant biocide. This can result in systems suffering from out of control bacterial growth. (See for example the textbook: Disinfection, Sterilization, and Preservation, Fifth Edition, by Seymour S. Block, Lippincott Williams & Wilkins, (2001) at least in pp. 31-57).

This problem is compounded by the fact that repeated applications of oxidant biocides is in many contexts, not commercially feasible. Many oxidant biocides cause adverse effects on paper brighteners, dyes, and other additives required to produce commercially acceptable paper products. Repeated introduction of oxidant biocides can also corrode many pieces of papermaking machinery.

One technique used to address this problem is to stabilize the oxidant biocides allowing them to suppress the viability of microorganisms over a long time while weakening the negative impact that the oxidant biocides have on the resulting paper and the papermaking equipment. As described in US Patents 3,328,294, 3,749,672, 3,170,883, 5565109 and 7651622 previous attempts at stabilizing oxidant biocides included the use of sulfamic acid, sulfamate stabilized chlorine, monochloramine, DMH stabilized halogen, AmBr-Cl₂, and organic nitrogen stabilized chlorine. While somewhat stable, these attempts have proven to be less effective biocides than desired. N-hydrogen sources have also been used to stabilize oxidant biocides but they too have been unsatisfactory because they are volatile and too rigid in their dosage requirements. This rigidity prevents the kind of flexible molar ratio adjustments that are often required to suit the specific conditions of the particular water system they are used to treat. Therefore there is a clear need and utility in an enhanced stabilized halogen biocide which is effective, compatible with other biocides, and flexible in dosage and concentration.

Another technique to address this problem is described in US Published Patent Applications 2006/0231505A and 2003/0029812A1 where they disclose the use of biocide blends. Such blends typically include an oxidant halogen which provides an initial large kill of the organisms and another longer lasting but less effective biocide which provides more long term microorganism suppression. Unfortunately many biocides are themselves incompatible with other biocides and the use of multiple biocides, each having their own preparation and introduction issues, requires an inordinate investment in complex application equipment. Furthermore, multiple biocide feeding machines be installed at various points along a papermaking production line thereby vastly increase the cost and complexity of adding the biocides. So there remains need for simplified making biocide and feeding approach.

US 2010/092574 A1 discloses a method for controlling microbial growth in an aqueous system containing sulfite and/or bisulfite residues by addition of a peroxy compound at a pH of greater than 5. Also disclosed is a method for stabilizing an active halogen biocide in an aqueous system containing peroxide residues by addition of an N-hydrogen compound to the active halogen biocide before combining it with the peroxide containing aqueous system. Further disclosed is an optimized papermaking biocide program consisting of initially treating sulfite bleached pulp with peroxide followed by application of an N-hydrogen-stabilized active halogen compound to the paper producing white waters and an analytical method for determining peroxide concentrations in aqueous systems in the presence of sulfite and/or bisulfite.

US 2003/029812 A1 discloses a method for controlling (e.g. inhibiting) the growth of microorganisms or killing microorganisms in an aqueous solution, such as that found in a water treatment facility or papermaking facility. The method includes adding an effective amount of (a) a free halogen-generating biocide, (b) a halogen stabilizer, and (c) a quaternary ammonium compound, a biocidal amine or salt thereof, or mixture thereof to the aqueous solution. The aqueous solution may be water in a recreational facility, an industrial cooling system, a water treatment facility or a water slurry, such as a circulating water slurry, in a papermaking facility. The mixture of the present invention is useful as a slimicide. The quaternary ammonium biocide and/or biocidal amine increase the efficacy of the free halogen-generating biocidal system.

US2005/147528 discloses a method of preparing a biocide having improved durability of its biocidal activity as well as disinfection efficiency at an initial stage, comprising the steps of: (a) preparing stabilized alkali or alkaline earth metal hypochlorite having a pH at least 11 by mixing a chlorine oxidant including alkali or alkaline earth metal hypochlorite with a stabilizer in an alkali solution; (b) preparing a bromide ion source; and (c) adding the bromide ion source prepared in step (b) into the stabilized alkali or alkaline earth metal hypochlorite prepared in step (a). Also, a method of controlling the growth of microorganisms using a biocide prepared by the method of the present invention is disclosed.

US2002/056689 discloses a method of controlling microbial fouling. The method controls microbial fouling using hypobromous acid, HOBr, formed by the reaction between an aqueous solution of alkali or alkaline earth metal hypochlorite and a bromide ion source. The method is characterized in that the alkali or alkaline earth metal hypochlorite or/and the bromide ion source is/are stabilized by the addition of a stabilizer before the hypobromous acid is formed by the reaction there between.

### Brief Summary of the Invention

The invention is directed to a composition according to claims 1 to 3.

The invention is also directed to a method of preventing the growth of microorganisms in a process water stream from a paper mill according to claim 4.

The invention is also directed to the use of the composition according to claims 1 to 3 as a biocide formulation in process water of a paper mill.

The following description is for purpose of disclosure. It is not meant to indicate that the disclosed embodiments are according to the invention or are not according to the invention. It is pointed out that the invention is according to claims 1 to 5.

According to the invention, the composition comprises a halogen, which is sodium hypochlorite, a sulfur bearing species, which is sulfamic acid, and a nitrogen stabilizer, which is ammonium sulfate, and an alkali, which is sodium hydroxide, in the amounts described in claim 1. In some herein disclosed compositions that may fall outside of the scope of the invention, the nitrogen stabilizer may be one item selected from the group consisting of ammonium sulfate, sodium sulfamate, and any combination thereof. The molar ratio of halogen to all of the sulfur in the sulfur bearing species may be more than 2:1. The alkali may be sodium hydroxide. The halogen may be chlorine, sodium hypochlorite, 1,3,5-Trichloroisocyanuric acid (TCCA), 1-bromo-3-chloro-5,5-dimethyl-2,4-imidazolidedione (BCDMH) and 1,3-dichloro-5,5-dimethyl-2,4-imidazolidedione (DCDMH). Some herein disclosed methods may comprise the steps of first adding to the sulfamic acid an alkali and then the adding urea and/or sodium sulfate.

The process water stream may be so rich in food for microorgasnisms that a single halogen oxidant biocide is not effective at exterminating the microorganisms population but the composition is. The process water stream may be one selected from the list consisting of a cooling tower water stream, and papermaking process water stream. The ratio of sulfamic acid or its salt to nitrogen stabilizer may be optimized at any ratio between the concerns of biocidal efficacy and impact on chemical additive present in the process water stream. The ratio of sulfamic acid or its salt to nitrogen stabilizer may be optimized at any ratio between the concerns of biocidal efficacy and corrosion on equipment present in the process water stream. The composition when used in a papermaking process might not reduce the effectiveness of OBA and DYE additives on paper made from that process. The salt may be sodium sulfamate.

Additional features and advantages are described herein, and will be apparent from, the following Detailed Description.

### Brief Description of the Drawings

FIG. 1 is a flowchart illustrating one method of combining constituents of the biocide composition.
FIG. 2 is a second flowchart illustrating one method of combining constituents of the biocide composition.
FIG. 3 is a third flowchart illustrating one method of combining constituents of the biocide composition.
FIG. 4 is a graph displaying data which demonstrates the effectiveness of the invention.

### Detailed Description of the Invention

The following definitions are provided to determine how terms used in this application, and in particular how the claims, are to be construed. The organization of the definitions is for convenience only and is not intended to limit any of the definitions to any particular category.

***"Alkali"*** means a composition of matter that functions as a pH altering chemical base.

***"DYE"*** or ***"Dye"*** means one or more compositions used in the papermaking industry to alter the optical properties of a substrate. Dyes often contain chromophoric groups and auxochrome and have good affinity to fiber and compatibility to other additive in paper industry.

***"Nitrogen stabilizer"*** means a stabilizer which contains at least one nitrogen atom.

***"OBA"*** means a dye or pigment based optical brightening agent which is a component of a coating formulation commonly applied to a paper substrate. Dyes or pigments that absorb ultraviolet radiation and reemit it at a higher frequency in the visible spectrum (blue), thereby effecting a white, bright appearance.

***"Pigment'*** means a solid material used in a papermaking process to alter the optical properties of a substrate.

***"Halogen Source"*** means a halogen atom by itself or a halogen atom associated with a cationic counterpart.

***"Halogen Stabilizer"*** means a halogen based material whose presence in proximity to a composition of matter functioning as an oxidizing biocide increases the amount of time that the composition remains in a sufficient chemical state to continue functioning as a biocide, this includes but is not limited to materials which preserve (or slow down the rate of loss of) the oxidizing capability of the biocide composition.

***"Stabilizer"*** means a composition of matter that increases the length of time that oxidizing halogen ions retain oxidant capacity and are capable of releasing free ions slowly thereby remaining an effective biocidal agent in a liquid environment.

***"Substrate"*** means a sheet of paper, a sheet of paper precursor, a mass of fibers, or any other cellulose based or synthetic fibrous material that can be coverted into a sheet of paper by a papermaking process.

In the event that the above definitions or a description stated elsewhere in this application is inconsistent with a meaning (explicit or implicit) which is commonly used, in a dictionary, the application and the claim terms in particular are understood to be construed according to the definition or description in this application, and not according to the common definition, or dictionary definition. In light of the above, in the event that a term can only be understood if it is construed by a dictionary, if the term is defined by the Kirk-Othmer Encyclopedia of Chemical Technology, 5th Edition, (2005), (Published by Wiley, John & Sons, Inc.) this definition shall control how the term is to be defined in the claims.

As stated above, the present disclosure provides for a composition and a method of use for said composition, which reduces biological activity in a process stream by providing a more efficient application of a biocide. In turn the biocide is more efficiently utilized, e.g. increase in persistence of the biocide in the system when needed, which can provide an environmental benefit because a process operator can use less biocide to combat various types of microorganisms and bacteria that pervade process streams, e.g. including water based systems, wherein one water based system example is a papermaking system.

According to the invention, the composition contains the components listed in claim 1. According to other compositions, stabilizers can be blended with chlorine or bromine to yield a milder oxidant. Benefits of halogen-stabilization include increased persistence of the halogen residual for improved control of microbial growth in biofilm or surface deposits and in systems with long residence times and high halogen demand.

Halogen-stabilization can also improve compatibility of the halogen with sensitive process additives, including dyes, optical brightening agents, polymers, and corrosion control products. However, it has been observed in several instances that the halogen becomes too persistent when it is blended with stabilizers, for example urea. As a result, the program may not adequately control fungi and several types of bacteria, including sphingomonads and spore-forming bacteria. Some forms of stabilized-halogen are more volatile, reducing the halogen residual available in the water-phase and contributing to vapor-phase corrosion.

In some herein disclosed compositions, an alkali may be present in a concentration sufficient to provide a pH of greater than 10, or greater than 12. Or the pH may range from 12 to about 13.5. An alkali can include one or more of the following chemistries: sodium hydroxide and potassium hydroxide.

Optionally, there is an additional component: excluding a stabilized bromine compound from said composition.

With respect to the halogen, in at least some compositions, the halogen is selected from at least one of the following: a chlorine source, alkaline hypohalite, Cl₂ gas (e.g. added to H₂0 stream prior to blending), NaOCl, Ca(OCl)₂, and electrically generated chlorine.

Some compositions may comprise urea in combination with additional stabilizer, including ammonium Sulfamate, to stabilize halogens for biocontrol

In some compositions, the stabilizer is an N-hydrogen compound.

In some compositions, the N-hydrogen compound is ammonium sulfamate.

In some compositions, the N-hydrogen compound excludes ammonium sulfate.

Some compositions contain an alkaline hypohalite, urea, and ammonium sulfamate.

The ratios between urea and an additional stabilizer can vary depending upon system conditions, e.g. levels of fungus. For example, one could take into account chemical kinetics between: (a) urea with halogen; (b) additional stabilizer with halogen; and (c) blend of urea and additional stabilizer with halogen.

In some compositions, the stabilizer blend between urea and the additional stabilizer is 50:50.

A method for reducing biological activity in a process stream is also disclosed, e.g. process stream contained in a water system. The method comprises: providing a composition to a process stream, wherein said composition contains: a halogen, urea, and an additional stabilizer excluding urea, optionally an alkali in a concentration sufficient to provide said composition with a pH of greater than 10; and optionally excluding a stabilized bromine compound from said composition.

In some herein disclosed methods, the composition is added to the process stream by the following mode of addition: forming a mixture of at least an alkali in a concentration sufficient to provide a pH of greater than 10 and an alkaline hypohalite, and secondarily mixing said mixture with a second mixture containing urea and said additional stabilizer, wherein said secondary mixing is optionally done with a T-mixer.

A method may comprise: adding a second composition to said process stream that contains a halogen, urea, and excludes an additional N-hydrogen compound.

With respect to the order of addition of the components, In at least one disclosed method, the composition is added to the process stream by the following mode of addition: forming a mixture of at least an alkali in a concentration sufficient to provide a pH of greater than 10, preferably 12 to 13.5, and an alkaline hypohalite, and secondarily mixing said mixture with a second mixture containing urea and an additional stabilizer. One of ordinary skill in the art could mix the first mixture and second mixture via a variety of techniques, e.g. apparatuses.

In at least one method, the first mixture and second mixture are mixed together with a T-mixer. One of ordinary skill the art would understand what a T-mixer is.

In at least one method, one of ordinary skill in the art can utilize a mixing chamber, such as the one disclosed in U.S. Patent No. 7,550,060 to carry out a mixing protocol of the chemistries.

The methodology of the present invention is applicable to a process water stream from a paper mill.

In methods that may or may not fall in the scope of the invention, a process stream may be a papermaking process stream.

In at least some herein disclosed methods, the papermaking process is a process selected from the group consisting of: tissue and/or towel, board; packaging; pulping; and recycled pulping.

In at least a disclosed method, the process stream contains fungus.

In at least one disclosed method, the process stream has a sulfite concentration of between 2 ppm to 50 ppm.

The efficacy of the composition for reducing biological activity can be measured by a variety of analytical techniques and controls schemes.

In at least one disclosed method, the process stream further comprises monitoring said biological activity in said process stream prior to and subsequent to the addition of said composition.

In at least one disclosed method, the biological activity is monitored by taking a sample of said process stream and plating said sample on a Petri dish or similar apparatus.

In at least one disclosed method, the biological activity is monitored by measuring ATP (adenosine triphosphate) levels of a sample from said process stream.

In at least one disclosed method, the biological activity is monitored by taking a sample of said process stream and monitoring dissolved oxygen and optionally the oxidation reduction potential of said sample and optionally responding to said biological activity by adding or reducing the amount of one or more chemistries which are added to said process stream, wherein said chemistries include said composition.

The compositions by themselves or compositions utilized to treat a process stream can be made outside of the process stream or within the process stream (in situ) or a combination thereof.

According to the invention is provided a composition according to claim 1, comprising a halogen, a halogen stabilizer, and an alkali provided for inhibiting the growth of microorganisms in a papermaking environment. The stabilizer is a composition comprising sulfur. The sulfur bearing species is sulfamic acid. The molar ratio of the halogen to the sulfamic acid is more than 2:1. By having such a large ratio of halogen to stabilizer, it has been observed that an unexpected biocidal effect occurs. This was quite surprising as at a molar ratio of 1:1 of halogen to sulfamic acid, no significant anti-biological efficacy was observed. Moreover because the stabilizers are needed to stabilize the halogens, it would be expected that more stabilizer relative to halogen would better stabilize the halogen, yet the opposite is the case.

A composition not according to the invention comprises a mixture of sulfur bearing species with urea. The halogen is mixed with sulfamic acid at molar ratio of Nitrogen to Chlorine of more than 2:1. By having such a stabilizer mixture of stabilized halogen, it has been observed that an unexpected synergistic effect occurs which results in the halogen remaining stabilized for a longer period of time, and without impairing the quality of the produced paper or corroding the papermaking equipment.

According to the invention, the stabilizer is a composition comprising a mixture of sulfur bearing species with ammonium sulfate.

In some herein disclosed compositions, the sulfur bearing species further comprises a nitrogen stabilizer.

In some herein disclosed compositions, the nitrogen stabilizer is one item selected from the group consisting of ammonium sulfate, sodium sulfamate, or any combination thereof.

In some herein disclosed compositions, the molar ratio of halogen to all of the sulfur in the sulfur bearing species is more than 2:1.

In some herein disclosed compositions, the alkali is sodium hydroxide.

In some herein disclosed compositions, the halogen are chlorine, sodium hypochlorite, 1,3,5-Trichloroisocyanuric acid (TCCA), 1-bromo-3-chloro-5,5-dimethyl-2,4-imidazolidedione (BCDMH) and 1,3-dichloro-5,5-dimethyl-2,4-imidazolidedione (DCDMH).

In some herein disclosed compositions, the sulfamic acid is first amended with alkali and then the urea/ammonium sulfate is added. Sodium hypochlorite is added to above mixture.

In some herein disclosed compositions, the sulfur baring nitrogen combined sodium hypochlorite first at molar ratio more than 2:1 nitrogen to chlorine and then is added to urea or ammonium sulfate.

In some herein disclosed compositions, the urea or ammonium sulfate combined sodium hypochlorite first then is added to sulfur baring nitrogen at different ratio. The order is significant because different stabilized halogen species are generated at different rates due to differing equilibrium constants. These differences can be accounted for by dosing the halogens in different amounts and in different orders. Also chlorine is able to transfer from stabilized chlorine to other nitrogen species so the order of combinations can compensate for that.

In some herein disclosed compositions, the composition contains no buffer.

The composition can be formulated on site by mixing the components together before mixing with halogen oxidant.

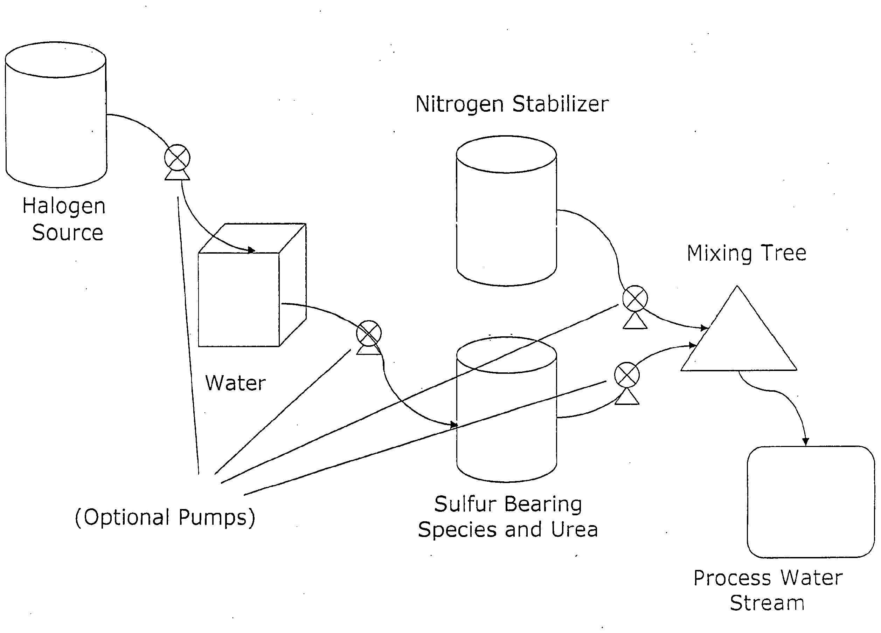

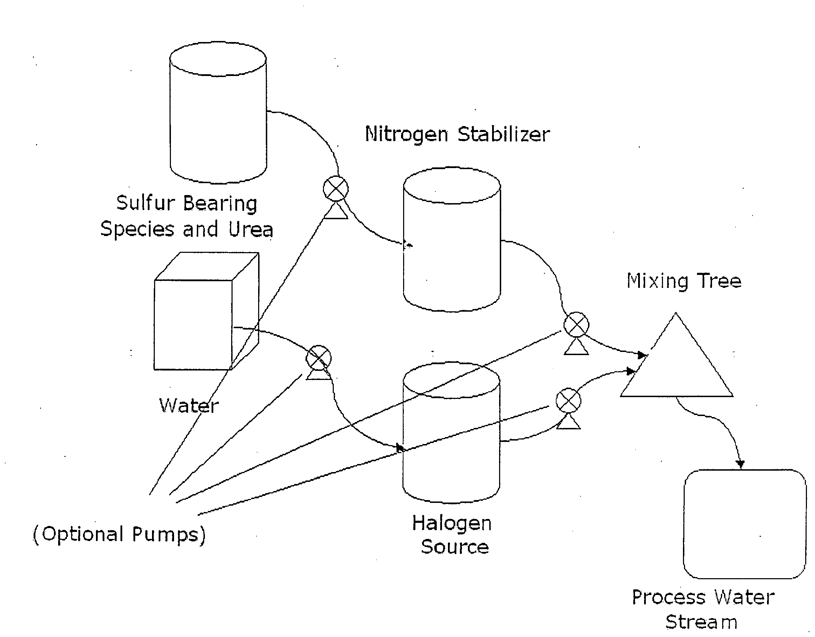

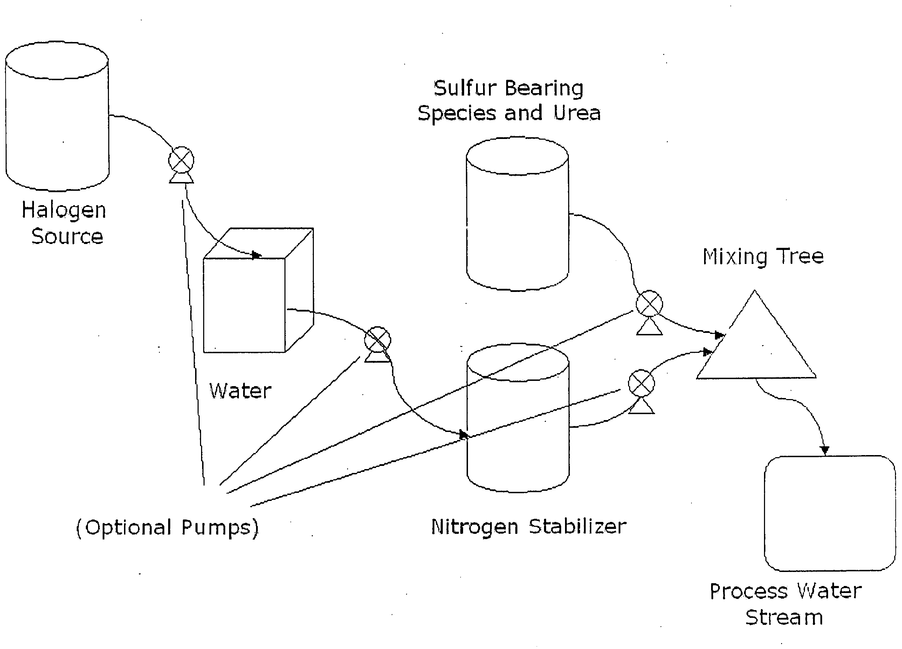

The composition can be formulated on site by mixing the components as illustrated in any one of FIGs 1, 2, and/or 3.

The microorganisms killed by the biocide may be sessile.

They may be planktonic.

One noted benefit of the invention is the fact that the sulfamic acid and the nitrogen stabilizer readily combine so when mixing the two a high product yield is achieved with little waste. In addition, unlike stand alone stabilizers containing inorganic nitrogen stabilizers, in some herein disclosed compositions, the mixture of sulfamic acid and nitrogen stabilizer functions at many different ratio amounts. As a result the relative amounts of sulfamic acid or nitrogen stabilizer can be appropriately increased or decreased depending on the particular environment it is to be used in. For example in cases where nitrogen stabilizer may interfere with particular paper additives such as OBA or DYE, the relative amount of sulfamic acid will be increased. In contrasts in contexts where the sulfamic acid has compatibility issues, the amount of nitrogen stabilizer can be increased.

The details of the formulation is targeted towards the nature of the biological infestation. For example if bacteria are just beginning to infiltrate one or more items of process equipment, a formulation containing relatively equal amounts of sulfamic acid and the nitrogen stabilizer is used because it is optimized to causes low impact on additives and low degrees of corrosion which is more desirable than a highly effective biocide when the infestation is weak. In contrast, when the contamination is intense or long term colonization, effectiveness of the biocide is more important than the one time effects on additives or corrosion and a therefore a formulation containing more sulfamic acid relative to the molar amount of nitrogen stabilizer is used. Thus by using a formulation having only two variables, a number of condition specific ratios can be provided which requires a simple input system yet is capable of dynamically responding to different conditions over the life cycle of the industrial facility.

An herein disclosed composition may be used as a biocidal agent in a cooling tower.

An herein disclosed composition may be used to reduce biofilm on a surface. Biofilm is the accumulation of sessile organisms on the surfaces of equipment. Such accumulations often pose particular problems as the available exposed surface area for the biocide to work on is reduced. Moreover there is often a tradeoff between biocide efficacy and impact the biocide has on biofilms yet the invention avoids harmful effects on process equipment yet effectively neutralizes biofilms.

An herein disclosed composition may be used to treat microorganisms in a membrane system. Membrane systems are often prone to biofilm colonization as microorganisms find their surfaces (because of composition, shape, or both) attractive. As they are also very delicate relative to other forms of process equipment, the general tradeoff issues are even more pronounced in membranes. Fortunately the composition is effective at treating membrane biofilms without damaging them. The membrane system may be a water permeable membrane. In at least one case the membrane is a part of a water treatment system.

An herein disclosed composition may have a particular pH before it is introduced into the system. In at least one case the pH is greater than 5 and less than 12, and is most preferably between 8 and 10.

In at least one case the ratio of the contents of the composition are balanced to optimize the composition's effectiveness and utility. In the prior art chlorosulfamate was used in a ratio of 1:1 with chlorine. This resulted in stronger than desired bonding of the chlorine and as a result it reduced the rate of releasing sulfamate from sulfate thereby reducing the effectiveness of the composition. In at least one case the ratio is different and as a result the composition is more effective. In at least one case the ratio of sulfamate to stabilizer within the composition is between (less than 4):1 and (more than 1):1. Experimental data has shown that in some circumstances ratios of 1:1 and 4:1 do not work at all or at best work poorly, ratios of 8:1 to 4:1 work somewhat and that 3:1 is highly effective as a biocide. This demonstrates that an unexpected sysnergistic effect based on more than just concentration is at work which is wholly novel and unexpected.

### EXAMPLES

The foregoing may be better understood by reference to the following examples, which are presented for purposes of illustration and are not intended to limit the scope of the invention.

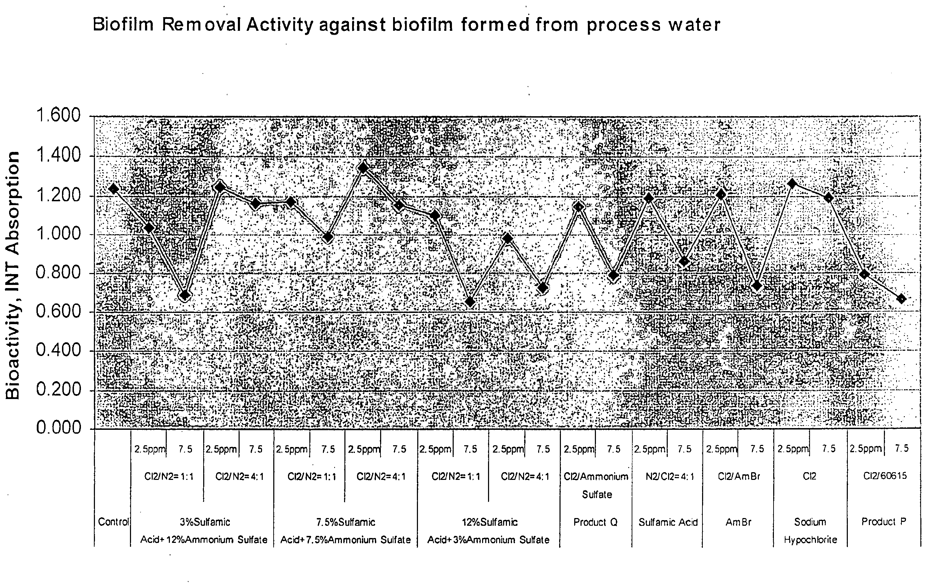

A number of biocide formulations were prepared and were applied to samples of process water from a paper mill. Their compositions and effectiveness are listed in FIG. 4 and in Table 1. Table 1 illustrates that a composition comprising 12% Sulfamic Acid and 3% Ammonium Sulfate is able to achieve high product yield without addition of NaOH. It also demonstrates that the addition of NaOH in bleach can improve feasibility of blending stabilizers at different rates.

**Table 1**

| **Optimization of blending condition for mixing stabilizer and sodium hypochlorite** | | | | | |
|---|---|---|---|---|---|
| Stabilizer formula | Molar Ratio Cl₂:N₂ | TRO*** ppm | FRO****, ppm | TRO Yield % | FRO/TRO % |
| | Caustic in Bleach= 0.5% | | | | |
| 3%SA* +12%AS** | 1:1 | 2200 | 61 | 29.32 | 2.77 |
| | 4:1 | 1550 | 520 | 19.26 | 33.55 |
| 7.5%SA+7.5%AS | 1:1 | 3575 | 220 | 47.26 | 6.15 |
| | 4:1 | 3400 | 960 | 42.17 | 28.24 |
| 12%SA+3%AS | 1:1 | 6200 | 370 | 81.31 | 5.97 |
| | 4:1 | 5400 | 2030 | 66.78 | 37.59 |
| sulfamic acid | 4:1 | 6550 | 1219 | 80.93 | 18.61 |

| | Caustic in Bleach= 3.2% | | | | |
|---|---|---|---|---|---|
| 3%SA+12%AS | 1:1 | 5265 | 810 | 70.16 | 15.38 |
| | 4:1 | 4905 | 1675 | 60.95 | 34.15 |
| 7.5%SA+7.5%AS | 1:1 | 4050 | 146 | 53.54 | 3.60 |
| | 4:1 | 8019 | 1000 | 99.45 | 12.47 |
| 12%SA+3%AS | 1:1 | 3524 | 240 | 46.22 | 6.81 |
| | 4:1 | 6885 | 3000 | 85.14 | 43.57 |
| sulfamic acid | 4:1 | 6300 | 1450 | 77.84 | 23.02 |

| | | | | | |
|---|---|---|---|---|---|
| *SA sulfamic Acid **AS: ammonium sulfate ***TRO: total residual oxidant **** FRO: free residual oxidat | | | | | |

FIG. 4 illustrates that 12% Sulfamic Acid and 3% ammonium sulfate showed more active on bioactivity inhibition than other combinations of stabilizers.

Without being limited in theory and the scope afforded in construing the claims, it is believed that naturally the chlorine transfers back and forth from one chloronitrogen species to another chloronitorgen species according to the equilibrium equations below and the invention makes use of the different equilibrium constants to optimize the presence of the desired reactions that produce the particularly desired chloronitrogen species that is effective as a biocide.

*H*₂*NSO*₃*H* + *NaOCl* ⇔ *ClHNSO*₃*H* + *NaOH*

*ClHNSO*₃*H* + *NaOCl* ⇔ *Cl*₂*NSO*₃*H* + *NaOH*

(*NH*₄)₂*SO*₄ + 2*NaOCl* ⇔ 2*NH*₂*Cl* + *Na*₂*SO*₄ +2*H*₂*O*

*NH*₂*Cl* + *NaOCl* ⇔ *NHCl*₂ + *NaOH*

*H*₂*NSO*₃*H* + *NH*₂*Cl* ⇔ *ClHNSO*₃*H* + *NH*₃

*ClHNSO*₃*H* + *NH*₂*Cl* ⇔ *Cl₂NSO*₃*H* + *NH*₃

In at least one embodiment the dosing sequence of the composition is calibrated to make optimal use of the relative equilibrium rates of the various chemical reactions. Each of the chemical reactions occurs at different rates and as a result Cl species are constantly passing back and forth between molecules and have different availabilities at different times. In at least one embodiment the reagents required for the lower occurring reactions are added to the composition first and are allowed to react somewhat or completely before the reagents required for the faster reactions are added. This avoids the faster reactions competing with the slower reactions. In at least one embodiment the reagents required to allow the chlorosulfamate species to react with the amine to form chloramine and ammonia is only added to the composition after chloroamine has been partially or completely formed.

In at least one embodiment the composition is diluted to produce a more mild (and less violent, reactive, or destructive) biocide effect. In at least one embodiment the methods of diluting biocides disclosed in US Patents 6,132,628 and 7,067,063 are employed. In at least one embodiment the composition is diluted so the species exists within the range of 100 ppm to 150,000 ppm.

In at least one embodiment the composition is diluted to produce a more mild (and less violent, reactive, or destructive) biocide effect. In at least one embodiment the methods of diluting biocides disclosed in US Patents 6,132,628 and 7,067,063 are employed. In at least one embodiment the composition is diluted so the species exists within the range of 100 ppm to 150,000 ppm.

## Claims

1. A composition being a biocide formulation, the composition comprises:
sodium hypochlorite as halogen source,
a halogen stabilizer comprising a mixture of sulfamic acid and ammonium sulfate, and
sodium hydroxide,
wherein the amount of sodium hydroxide in the composition is in the range of 0.5 to 3.2%, and wherein the amount of sulfamic acid in the composition is 12% and the amount of ammonium sulfate in the composition is 3%, and wherein the molar ratio of Cl₂ to N₂ is 4:1.

2. The composition of claim 1, wherein the amount of sodium hydroxide in the composition is 0.5%

3. The composition of claim 1, wherein the amount of sodium hydroxide in the composition is 3.2%.

4. A method of preventing the growth of microorganisms in a process water stream from a paper mill, the method including the step of:
introducing a composition according to any one of claims 1 to 3 into the process water stream from the paper mill.

5. Use of the composition of any one of claims 1 to 3 as a biocide formulation in process water of a paper mill.

## Patentansprüche

1. Zusammensetzung, die eine Biozidformulierung ist, wobei die Zusammensetzung umfasst:
ein Natriumhypochlorit als Halogenquelle,
einen Halogenstabilisator, der eine Mischung aus Amidosulfonsäure und Ammoniumsulfat umfasst, und
Natriumhydroxid,
wobei die Menge an Natriumhydroxid in der Zusammensetzung im Bereich von 0,5 bis 3,2 % liegt und wobei die Menge an Amidosulfonsäure in der Zusammensetzung 12 % beträgt und die Menge an Ammoniumsulfat in der Zusammensetzung 3 % beträgt und wobei das Molverhältnis von Cl₂ zu N₂ 4:1 ist.

2. Zusammensetzung nach Anspruch 1, wobei die Menge an Natriumhydroxid in der Zusammensetzung 0,5 % beträgt.

3. Zusammensetzung nach Anspruch 1, wobei die Menge an Natriumhydroxid in der Zusammensetzung 3,2 % beträgt.

4. Verfahren zum Verhindern des Wachstums von Mikroorganismen in einem Prozesswasserstrom einer Papierfabrik, wobei das Verfahren den Schritt umfasst:
Einbringen einer Zusammensetzung nach einem der Ansprüche 1 bis 3 in einen Prozesswasserstrom aus der Papierfabrik.

5. Verwendung der Zusammensetzung nach einem der Ansprüche 1 bis 3 als Biozidformullerung in einem Prozesswasser einer Papierfabrik.

## Revendications

1. Composition à formulation biocide, la composition comprenant :
de l'hypochlorite de sodium en tant que source d'halogène,
un stabilisateur d'halogène comprenant un mélange d'acide sulfamique et de sulfate d'ammonium, et
de l'hydroxyde de sodium,
la quantité d'hydroxyde de sodium présent dans la composition étant dans la plage comprise entre 0,5 et 3,2 %, et la quantité d'acide sulfamique présent dans la composition étant de 12 % et la quantité de sulfate d'ammonium présent dans la composition étant de 3 %, et le rapport molaire de Cl₂ à N₂ étant de 4:1.

2. Composition selon la revendication 1, dans laquelle la quantité d'hydroxyde de sodium présent dans la composition est de 0,5 %.

3. Composition selon la revendication 1, dans laquelle la quantité d'hydroxyde de sodium présent dans la composition est de 3,2 %.

4. Procédé de prévention du développement de micro-organismes dans un courant d'eau de traitement provenant d'une usine de papier, le procédé comprenant l'étape :
d'introduction d'une composition selon l'une quelconque des revendications 1 à 3 dans le courant d'eau de traitement provenant de l'usine de papier.

5. Utilisation de la composition selon l'une quelconque des revendications 1 à 3 en tant que formulation biocide dans de l'eau de traitement d'une usine de papier.
